# EUROPÄISCHE PATENTSCHRIFT

(11) **EP 2 145 783 B1**
(45) Veröffentlichungstag und Bekanntmachung des Hinweises auf die Patenterteilung: **07.09.2011**
(21) Anmeldenummer: 09009245.3
(22) Anmeldetag: 15.07.2009
(51) Int. Cl.: B60H 1/00

(54) **Fahrzeugheizung**
Vehicle heater
Chauffage de véhicule

(30) Priorität: 15.07.2008 DE 102008033142
(43) Veröffentlichungstag der Anmeldung: 20.01.2010
(73) Patentinhaber: BorgWarner BERU Systems GmbH, 71636 Ludwigsburg (DE)
(72) Erfinder: Hetzler, Jürgen, 76877 Offenbach (DE); Ernst, Norbert, 76831 Billigheim (DE)
(74) Vertreter: Twelmeier Mommer & Partner

(56) Entgegenhaltungen:
- EP-A1- 1 768 457
- WO-A1-2005/049350
- WO-A1-2006/059960
- WO-A1-2007/071335
- US-B1- 6 180 930

## Beschreibung

Die Erfindung betrifft eine Fahrzeugheizung mit den im Oberbegriff des Anspruches 1 angegebenen Merkmalen. Eine derartige Fahrzeugheizung ist beispielsweise aus der EP 1768 457 A1 bekannt.

Die aus der EP 1 768 457 A1 bekannte Fahrzeugheizung hat zwei Kontaktplatten zwischen denen ein Positionierrahmen mit PTC-Heizelementen angeordnet ist. Der Positionierrahmen wird mit den Kontaktplatten verrastet.

Aufgabe der vorliegenden Erfindung ist es, einen Weg aufzuzeigen, wie sich die Fertigung einer derartigen Fahrzeugheizung vereinfachen lässt.

Diese Aufgabe wird durch eine Fahrzeugheizung mit den im Anspruch 1 angegebenen Merkmalen gelöst. Vorteilhafte Weiterbildungen der Erfindung sind Gegenstand der Unteransprüche.

Eine erfindungsgemäße Fahrzeugeinrichtung hat nicht nur einen sondern zwei Positionierrahmen, die das wenigstens eine Heizelement halten. Die Kontaktplatten können deshalb in einem vorgelagerten Fertigungsschritt mit den Positionierrahmen versehen werden. Die Positionierrahmen greifen dabei um die Längskanten der Kontaktplatten herum, beispielsweise indem die Positionierrahmen um die Kontaktplatten herumgespritzt werden oder die Positionierrahmen auf die Kontaktplatten aufgeschoben oder aufgerastet werden. Auf diese Weise lässt sich das Zusammenbauen der Fahrzeugheizung vereinfachen, da dabei weniger Bauteile zu handhaben sind. Vorteilhaft können PTC-Elemente, zwei Positionierrahmen und zwei Kontaktplatten zu einer Einheit vormontiert werden.

Die Kontaktplatten und die an ihnen befestigten Positionierrahmen können vorteilhaft gleich ausgebildet sein, so dass weniger unterschiedliche Bauteile benötigt werden. Dies vereinfacht die Vorratshaltung und ermöglicht Kosteneinsparungen.

Die Positionierrahmen können eine Aufnahme für das Heizelement oder die Heizelemente bilden. Zum Zusammensetzen der Heizeinrichtungen werden die Heizelemente, bevorzugt quaderförmige PTC-Elemente, einfach in die dafür vorgesehenen Aufnahmen gelegt und anschließend mit einer zweiten Kontaktplatte, die einen bevorzugt gleich ausgebildeten Positionierrahmen trägt, bedeckt. Die Tiefe der von den Positionierrahmen sollte dabei die Hälfte der Dicke der Heizelemente oder etwas weniger betragen. Bevorzugt haben die Positionierrahmen Klemmnasen zum Klemmen der PTC-Elemente.

Geeignete Positionierrahmen lassen sich aus Kunststoff oder Polymerkeramik herstellen und können auf die Kontaktplatten aufgerastet, aufgeschoben oder um die Kontaktplatten gespritzt werden.

Bevorzugt lassen die Positionierrahmen eine von den Heizelementen abgewandte Rückseite der Kontaktplatten frei. Diese Rückseite der Kontaktplatten wird bevorzugt mit einer elektrisch isolierenden Auflage bedeckt, beispielsweise einem Streifen aus Kaptonfolie oder einer elektrisch isolierenden Keramik. Um eine besonderes gute Isolation zu erzielen, können auch mehrere Streifen aus gleichem oder unterschiedlichem Material aufeinander gelegt werden.

Zwar kann eine elektrische Isolierung der Kontaktplatten auch durch das Material eines die Rückseite bedeckenden Positionierrahmens, beispielsweise Polyamid, erreicht werden. Spritzgießfähige Materialien haben jedoch in der Regel den Nachteil, stets auch eine erhebliche Wärmeisolierung zu bewirken. Indem die Kontaktplatten durch eine separate Auflage elektrisch isoliert werden, lässt sich die elektrische Isolation mit einer vorteilhaft höheren Wärmeleitfähigkeit und somit besseren Wärmeankopplung der Heizeinrichtung an den Wärmeübertrager kombinieren.

Bevorzugt umschließen die Positionierrahmen die Heizelemente fluiddicht. Insbesondere wenn die Kontaktplatten und die Heizelemente nicht in Rohren angeordnet sind oder die Rohre nicht fluiddicht sind, können die Positionierrahmen vorteilhaft Kontakt zwischen dem zu erwärmenden Fluid und den Heizelementen verhindern. Beispielsweise können die beiden Positionierrahmen einer Heizvorrichtung dichtend aneinander anliegen. Möglich ist es auch, dass zwischen den Isolierrahmen eine Dichtung angeordnet ist.

Bei einer erfindungsgemäßen Fahrzeugheizung haben der oder die Wärmeübertrager Heizeinrichtungsaufnahmen, in denen die Heizeinrichtungen angeordnet sind. Die Heizeinrichtungsaufnahmen können beispielsweise als offene Kanäle ausgebildet sein, in welche die Heizeinrichtungen bzw. deren Komponenten eingelegt werden. Derartige Kanäle können beispielsweise einen U-förmigen Querschnitt haben. Bevorzugt haben die Heizeinrichtungsaufnahmen jedoch Öffnungen, in denen die Heizeinrichtungen stecken.

Mittels an den Wärmeübertragern vorgesehenen Heizeinrichtungsaufnahmen lässt sich eine besonders einfache und kostengünstige Fertigung realisieren. Das Befestigen der Heizeinrichtungen an dem Wärmeübertrager kann auf diese Weise nämlich mit geringem Aufwand vorgenommen werden. Insbesondere können die Wärmeübertrager vorteilhaft genutzt werden, die einzelnen Elemente der Heizeinrichtungen, nämlich deren Kontaktplatten mit dazwischen angeordneten Heizelementen, zusammen zu halten. Dadurch lässt sich der Aufbau der Heizeinrichtungen vereinfachen, insbesondere kann auf ein aufwendiges Verlöten oder Verkleben der Kontaktplatten der Heizeinrichtungen mit den Heizelementen verzichtet werden. Zudem lassen sich die Heizeinrichtungen in den Heizeinrichtungsaufnahmen der Wärmeübertrager klemmend fixieren, so dass auch diesbezüglich eine Vereinfachung der Fertigung erzielt werden kann.

Bevorzugt hat eine erfindungsgemäße Fahrzeugheizung mehrere Wärmeübertrager, die in Strömungsrichtung des zu erwärmenden Fluids hintereinander angeordnet sind.

Bevorzugt sind dabei die Heizeinrichtungen von benachbarten Wärmeübertragern in Bezug auf die Strömungsrichtung versetzt angeordnet. Auf diese Weise lässt sich eine besonders effiziente Wärmeabgabe an einen die Wärmeübertrager durchströmenden Luftstrom erwirken. Bei Verwendung von gleichen Wärmeübertragern lässt sich eine versetzte Anordnung der Heizeinrichtungen dadurch erreichen, dass benachbarte Wärmeübertrager in Bezug auf die Strömungsrichtung unterschiedlich angeordnet sind. Beispielsweise können benachbarte Wärmeübertrager in Bezug auf die Strömungsrichtung seitlich versetzt angeordnet sein. Eine weitere Möglichkeit für eine versetzte Anordnung der Heizeinrichtungen besteht darin, benachbarte Wärmeübertrager in Bezug auf die Strömungsrichtung mit umgedrehter Orientierung anzuordnen; also so dass bei einem Wärmeübertrager seine Vorderseite angeströmt wird, während ein in Strömungsrichtung dahinter angeordneter Wärmeübertrager dem Luftstrom mit seiner Rückseite zugewandt ist.

Bevorzugt weisen die Wärmeübertrager Röhren auf, in deren Öffnungen die Heizeinrichtungen stecken. Auf diese Weise lässt sich eine besonders gute Wärmeankopplung der Wänneübertrager an die Heizeinrichtungen bewirken, insbesondere indem die Röhren nach dem Einbringen der Heizeinrichtungen verpresst werden. Bei dieser Ausgestaltung hat eine dichte Verbindung der Positionierrahmen keine Vorteile. Es ist aber vorteilhaft die Enden der Röhren abzudichten.

Eine vorteilhafte Weiterbildung der Erfindung, sieht vor, dass die Wärmeübertrager Strangpressprofile sind. Bevorzugt weisen sie Durchbrüche auf, die von einem Luftstrom quer zur Strangpressrichtung durchströmbar sind. Geeignete Durchbrüche lassen sich in einem Strangpressprofil beispielsweise durch einen Stanzvorgang mit geringem Aufwand herstellen. Die Verwendung von Strangpressprofilen als Wärmeübertrager ermöglicht eine kostengünstige Fertigung, da ein mühsames Zusammenbauen des Wärmeübertragers aus einer größeren Anzahl von Einzelteilen vermieden werden kann. Im Gegensatz zu herkömmlichen Wärmetauschern, die aus Blechlamellen aufgebaut sind, lässt sich deshalb eine wesentliche Vereinfachung erzielen. Zudem lassen sich Strangpressprofile ohne zusätzlichen Aufwand mit in Strangpressrichtung verlaufenden Röhren herstellen, in deren Öffnungen die Heizeinrichtungen gesteckt werden können.

Die bevorzugt als Wärmeübertrager verwendeten Strangpressprofile haben bevorzugt eine Basisplatte, in der die durchströmbaren Durchbrüche sind. Von einer solchen Basisplatte können auf einer oder auf beiden Seiten Wärmeabgaberippen ausgehen. Bevorzugt hat das Strangpressprofil nur eine einzige Platte. Es können jedoch auch Strangpressprofile mit zwei, insbesondere parallel angeordnete, Platten verwendet werden, die durch zwischen ihnen angeordnete Wärmeabgaberippen oder Zwischenwände verbunden sind.

Bevorzugt hat jeder Wärmeübertrager einer erfindungsgemäßen Fahrzeugheizung mehrere Heizeinrichtungsaufnahmen. Möglich ist es jedoch auch einen Wärmeübertrager mit nur einer einzigen Heizeinrichtungsaufnahme zu versehen. Es ist möglich Wärmeübertrager einer erfindungsgemäßen Fahrzeugheizung in Reihen nebeneinander anzuordnen und mehrere derartige Reihen in Strömungsrichtung hintereinander anzuordnen.

Eine weitere vorteilhafte Weiterbildung der Erfindung sieht vor, dass sich quer zur Strömungsrichtung nebeneinander mehrere Kontaktschienen erstrecken, wobei die beiden Kontaktplatten der Heizeinrichtungen jeweils an eine von zwei benachbarten Kontaktschienen angeschlossen sind. Diese Kontaktschienen können in Strömungsrichtung alternierend an den Plus- bzw. den Minuspol einer Spannungsquelle angeschlossen werden, so dass sich eine einfache und übersichtliche Schaltungsanordnung ergibt.

Eine weitere vorteilhafte Weiterbildung der Erfindung sieht vor, dass beide Kontaktplatten der Heizeinrichtungen elektrisch von den Wärmeübertragern isoliert sind. Auf diese Weise lässt sich eine Erhöhung der Sicherheit bewirken, die insbesondere für höhere Versorgungsspannungen von beispielsweise 400 Volt vorteilhaft ist. Indem nämlich beide Kontaktplatten elektrisch gegenüber den Wärmeübertragern isoliert sind, können die Wärmeübertrager auf Masse gelegt werden, so dass im Falle eines Defekts verhindert ist, dass die Wärmeübertrager auf Potential liegen.

Weitere Einzelheiten und Vorteile der Erfindung werden an einem Ausführungsbeispiel unter Bezugnahme auf die beigefügten Zeichnungen erläutert. Es zeigen:
- Figur 1: ein Ausführungsbeispiel einer erfindungsgemäßen Fahrzeugheizung;
- Figur 2: die Wärmeübertrager des in Figur 1 dargestellten Ausführungsbeispiels zusammen mit den an ihnen befestigten Heizeinrichtungen und Kon- taktschienen;
- Figur 3: ein Detail einer Seitenansicht zu Figur 2;
- Figur 4: eine Explosionsdarstellung einer Heizeinrichtung der dargestellten Fahrzeugheizung;
- Figur 5: die Halterung des in Figur 1 dargestellten Ausführungsbeispiels; und
- Figur 6: die in Figur 5 dargestellte Halterung mit daran befestigten Wärme- übertragern.

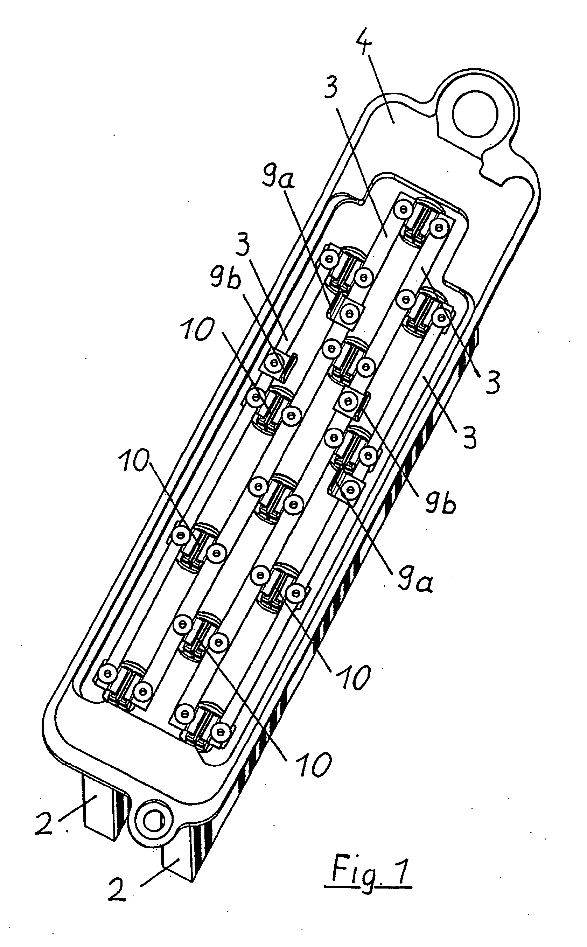

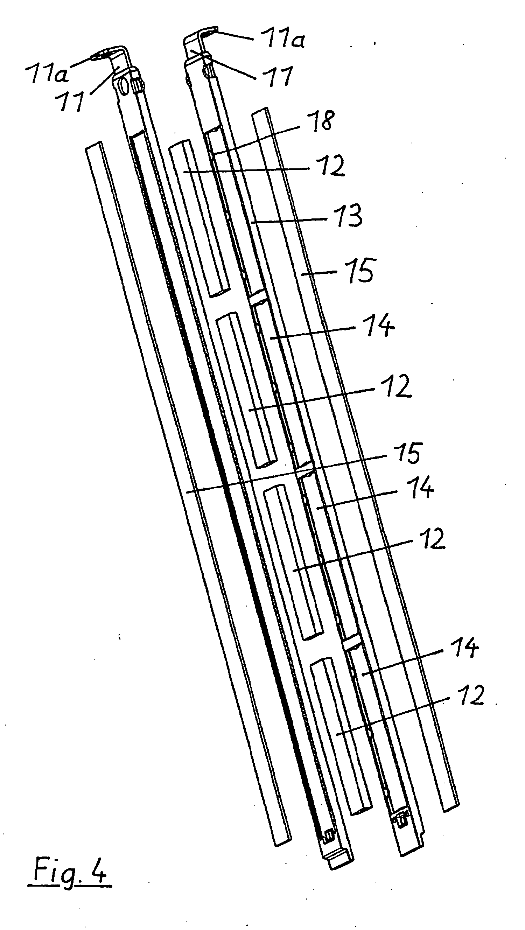

Figur 1 zeigt ein Ausführungsbeispiel einer Fahrzeugheizung 1 mit mehreren von einem zu erwärmenden Luftstrom durchströmbaren Wärmeübertragern 2, die in Strömungsrichtung hintereinander angeordnet sind. Die Wärmeübertrager 2 haben Heizeinrichtungsaufnahmen mit Öffnungen, in denen Heizeinrichtungen 10, deren Aufbau in Figur 4 dargestellt ist, stecken. Die Heizeinrichtungen 10 sind an Kontaktschienen 3 angeschlossen, die sich senkrecht zur Strömungsrichtung erstrecken und bestimmungsgemäß alternierend an die Pole einer Spannungsquelle angeschlossen werden. Die Wärmeübertrager 2 mit den an ihnen befestigten Heizeinrichtungen 10 sind durch eine Halterung 4 zu einer Baugruppe verbunden.

Die Halterung 4 kann beispielsweise aus Kunststoff oder Metall, insbesondere aus Aluminium, sein. Bei dem dargestellten Ausführungsbeispiel ist die Halterung 4 aus Metall und kann deshalb vorteilhaft für eine elektrische Erdung der Wärmeübertrager 2 verwendet werden. Bevorzugt ist die Halterung 4 klemmend mit den Wärmeübertragern 2 verbunden. Alternativ oder zusätzlich ist auch eine formschlüssige Befestigung der Wärmeübertrager 2 an der Halterung 4 möglich, beispielsweise durch Verschraubung oder Verrastung.

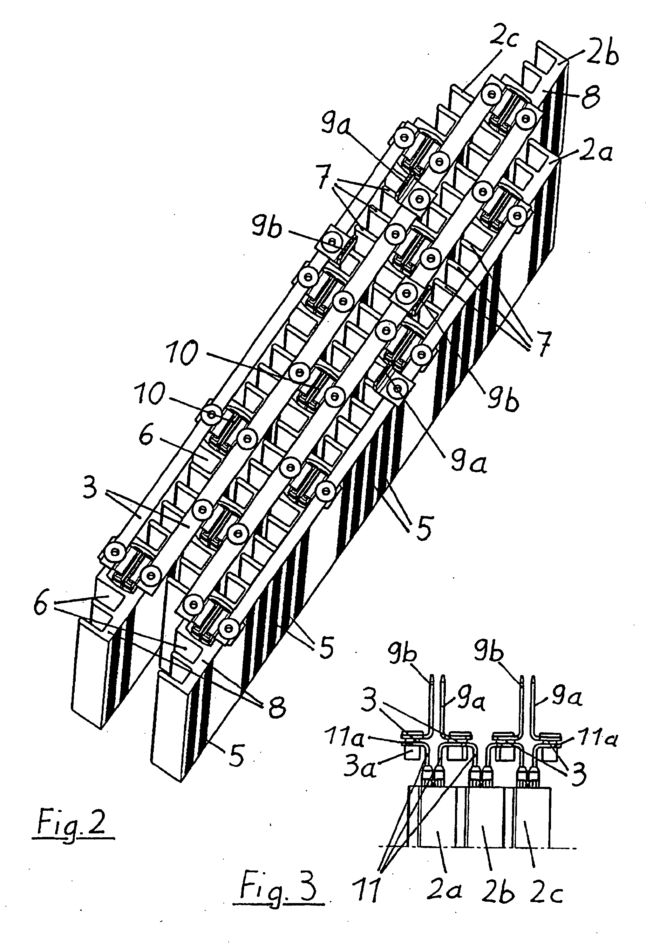

In Figur 2 ist die in Figur 1 gezeigte Fahrzeugheizung ohne die Halterung dargestellt. Man erkennt in Figur 2, dass die Fahrzeugheizung drei identische Wärmeübertrager 2a, 2b, 2c aufweist, die in Strömungsrichtung hintereinander angeordnet sind. Benachbarte Wärmeübertrager 2a, 2b, 2c sind dabei quer zur Strömungsrichtung versetzt angeordnet. Vorteilhaft ergibt sich auf diese Weise, dass die Heizeinrichtungen 10 von benachbarten Wärmeübertragern 2a, 2b, 2c in Bezug auf die Strömungsrichtung versetzt angeordnet sind und sich deshalb eine verbesserte Wärmeabgabe an den Luftstrom ergibt.

Die Wärmeübertrager 2a, 2b, 2c sind bei dem dargestellten Ausführungsbeispiel Strangpressprofile, die Durchbrüche 5 aufweisen, die von einem Luftstrom quer zur Strangpressrichtung durchströmbar sind. Diese Durchbrüche 5 sind bei dem dargestellten Ausführungsbeispiel nur schematisch durch streifenförmige Bereiche des Strangpressprofils dargestellt. In den streifenförmigen Bereichen ist eine Vielzahl von Durchbrüchen 5 angeordnet. Die Durchbrüche 5 können beispielsweise in das Strangpressprofil gestanzt werden und nahezu beliebig geformt sein. Geeignet sind insbesondere kreis- oder schlitzförmige Löcher.

Die Strangpressprofile 2a, 2b, 2c weisen jeweils mehrere, bei dem dargestellten Ausführungsbeispiel vier, Röhren 6 auf, in denen die Heizeinrichtungen 10 stecken. Die Röhren 6 bzw. die Öffnungen dieser rechteckigen Röhren 6 bilden somit Aufnahmen für die Heizeinrichtungen 10.

Die Strangpressprofile 2a, 2b, 2c haben Wärmeabgaberippen 7, die von einer Basisplatte 8 ausgehen, in der sich die von dem erwärmenden Luftstrom durchströmbaren Durchbrüche 5 befinden. Bei dem dargestellten Ausführungsbeispiel gehen jeweils nur von einer Seite dieser Platte 8 Wärmeabgaberippen 7 aus. Es können jedoch auch von beiden Seiten der Platte 8 Wärmeabgaberippen 7 ausgehen.

Figur 3 zeigt ein Detail einer Seitenansicht zu Figur 2 mit Blickrichtung senkrecht zur Strömungsrichtung und senkrecht zur Strangpressrichtung der Wärmeübertrager 2a, 2b, 2c. Die bereits erwähnten Kontaktschienen 3 sind in den Figuren 1 und 2 deutlicher zu erkennen. Abgesehen von der in Strömungsrichtung vordersten und der in Strömungsrichtung hintersten Kontaktschiene 3 sind an jede Kontaktschiene 3 jeweils Heizeinrichtungen 10 von zwei benachbarten Wärmetauschern 2a, 2b, 2c angeschlossen. An den Kontaktschienen 3 sind elektrische Anschlüsse 9a, 9b befestigt. Die Anschlüsse 9a werden bestimmungsgemäß an den Minuspol und die Anschlüsse 9b an den Pluspol einer Spannungsquelle angeschlossen. Auf diese Weise ergibt sich, dass die Heizeinrichtungen 10 benachbarter Wärmetauscher 2a, 2b, 2c jeweils in umgekehrter Richtung von Strom durchflossen werden.

Der Aufbau der Heizeinrichtungen 10 ist in Figur 4 zu sehen. Jede der Heizeinrichtungen 10 hat zwei gleiche Kontaktplatten 11, zwischen denen mehrere quaderförmige Heizelemente 12 aus einer PTC-Keramik (positiver Temperaturcoeffizient) angeordnet sind. Die Kontaktplatten 11 tragen jeweils einen Positionierrahmen 13, der Aufnahmen 14 für die Heizelemente 12 definiert. Der Positionierrahmen 13 ist bevorzugt aus Kunststoff und kann auf die Kontaktplatten 11 aufgeschoben sein. Der Positionierrahmen 13 kann jedoch auch um die Kontaktplatten 11 herum gespritzt werden. Der Positionierrahmen 13 hat Klemmnasen 18, die an die Aufnahmen 14 umgebenden Innenseiten angeordnet sind und eingesetzte Heizelemente klemmend fixieren.

Vorteilhaft können die Kontaktplatten 11, Positionierrahmen 13 und die Heizelemente 12 zu einer Einheit vormontiert werden, die sich gut handhaben lässt.

Wie Figur 4 zeigt, lässt der Positionierrahmen 13 bei dem dargestellten Ausführungsbeispiel eine von den Heizelementen 12 abgewandten Rückseite der Kontaktplatten 11 frei. Die Kontaktplatten 11 tragen auf ihrer von den Heizelementen 12 abgewandten Seite eine elektrisch isolierende Auflage 15, bei dem dargestellten Ausführungsbeispiel einem Streifen aus Kaptonfolie oder Keramik. Die Isolation kann aber auch von dem Positionierrahmen 13 gebildet werden oder durch Umwickeln mit Kunststofffolie, beispielsweise Kaptonfolie. Bevorzugt wird eine Auflage 15 verwendet und als zusätzliche Isolation mit Folie umwickelt. Vorteilhaft können durch eine Folie die Bestandteile einer vormontierten Heizeinrichtung 10 zusammen gehalten werden, so dass sich diese besser handhaben lässt.

Die an die Kontaktschienen 3 angeschlossenen Enden 11a der Kontaktplatten 11 sind abgebogen. Diese Enden 11a können beispielsweise durch Niete 3a oder Schrauben an den Kontaktschienen 3 befestigt werden. In entsprechender Weise sind auch die abgebogenen Enden 11a der Kontaktplatten durch Niete 3a an den Kontaktschienen 3 befestigt.

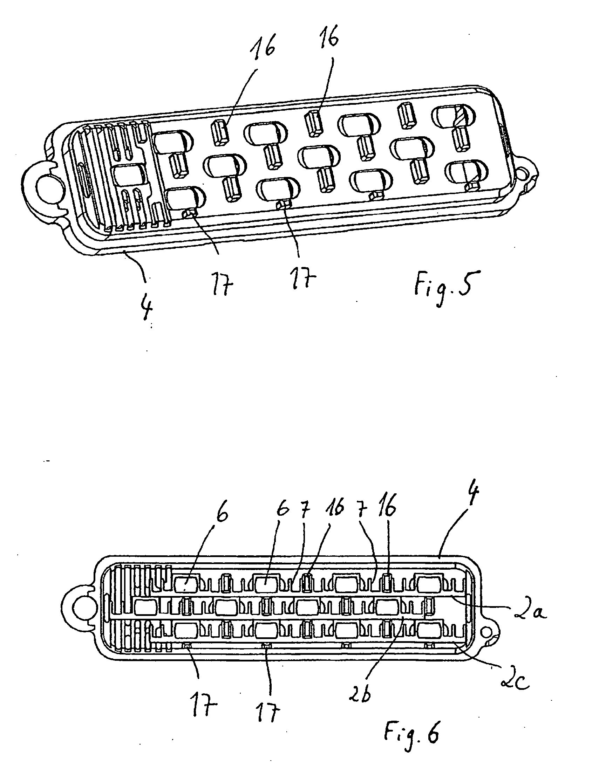

Die Figuren 5 und 6 zeigen die Halterung 4 mit Blick auf die Unterseite, die im montierten Zustand den Wärmeübertragern 2a, 2b, 2c zugewandt ist. In Figur 5 ist die Halterung 4 ohne Wärmeübertrager 2a, 2b, 2c, in Figur 6 mit Wärmeübertrager 2a, 2b, 2c dargestellt. Die Halterung 4 ist klemmend mit den Wärmeübertragern 2a, 2b, 2c verbunden. Dazu hat die Halterung 4 Positionier- und Klemmelemente 16, 17, zwischen denen die Wärmeübertrager 2a, 2b, 2c klemmend gehalten sind. Die Positionier- und Klemmelemente 16, 17 sind dabei in mehreren Reihen an der Unterseite der Halterung 4 angeordnet. Diese Reihen verlaufen quer zur Strömungsrichtung und sind zueinander versetzt angeordnet. Ein Wärmeübertrager 2a, 2b, 2c ist also zwischen zwei Reihen von Positionier- und Klemmelementen 16, 17 eingeklemmt. Einem Element 16, 17 der einen Reihe liegt dabei eine Lücke zischen Elemente 16, 17 der anderen Reihe gegenüber. Die Klemmelemente 16 greifen zwischen den Wärmeabgaberippen 7 ein. Die Klemmelemente 16 sind bei dem dargestellten Ausführungsbeispiel näherungsweise als rechteckige Zapfen oder Rippen ausgebildet, die zwischen benachbarten Wärmeabgaberippen 7 eingeklemmt sind. Gleichzeitig dienen die Klemmelemente 16 als Anschlag für den benachbarten Wärmeübertrager 2a, bzw. 2b. Die Elemente 17 können ebenfalls eine klemmende Funktion haben oder lediglich als Anschläge zur Positionierung der Wärmeübertrager 2a, 2b, 2c dienen.

### Bezugszahlen

- 1: Fahrzeugheizung
- 2a: Wärmeübertrager
- 2b: Wärmeübertrager
- 2c: Wärmeübertrager
- 3: Kontaktschiene
- 3a: Niet
- 4: Halterung
- 5: Durchbrüche
- 6: Röhre
- 7: Wärmeabgaberippe
- 8: Platte
- 9a: Anschlüsse
- 9b: Anschlüsse
- 10: Heizeinrichtung
- 11: Kontaktplatte
- 11a: abgebogenes Ende der Kontaktplatten
- 12: Heizelemente
- 13: Positionierrahmen
- 14: Aufnahme für Heizelement
- 15: Isolierauflage
- 16, 17: Positionier- und Klemmelemente
- 18: Klemmnasen

## Patentansprüche

1. Fahrzeugheizung mit
wenigstens einem von einem zu erwärmenden Luftstrom durchströmbaren Wärmeübertrager (2a, 2b, 2c), und wenigstens einer an dem Wärmeübertrager (2a, 2b, 2c) befestigten Heizeinrichtung (10), die zwei Kontaktplatten (11) aufweist, zwischen denen ein Heizelement (12) angeordnet ist, das von einem Positionierrahmen (13) gehalten ist, der an einer der Kontaktplatten (11) durch Aufrasten, Aufschieben oder Umspritzen befestigt ist,
**dadurch gekennzeichnet, dass**
die Kontaktplatten (11) der Heizeinrichtungen (10) jeweils einen Positionierrahmen (13) tragen.

2. Fahrzeugheizung nach Anspruch 1, **gekennzeichnet durch** eine Halterung (4), die klemmend an dem wenigstens einen Wärmeübertrager (2a, 2b, 2c) befestigt ist.

3. Fahrzeugheizung nach einem der vorstehenden Ansprüche, **dadurch gekennzeichnet, dass** der Wärmeübertrager (2a, 2b, 2c) wenigstens eine Heizeinrichtungsaufnahme (6) aufweist, in der die oder eine der Heizeinrichtungen (10) angeordnet ist.

4. Fahrzeugheizung nach Anspruch 3, **dadurch gekennzeichnet, dass** die Heizeinrichtungsaufnahme (6) eine Öffnung aufweist, in der die Heizeinrichtung (10) steckt.

5. Fahrzeugheizung nach einem der vorstehenden Ansprüche, **dadurch gekennzeichnet, dass** die Positionierrahmen (13) Klemmnasen (18) zum Klemmen der Heizelemente (12) aufweisen.

6. Fahrzeugheizung nach einem der Ansprüche 3 bis 5, **dadurch gekennzeichnet, dass** die Heizeinrichtungsaufnahmen (6) als Röhren ausgebildet sind, in denen die Heizeinrichtungen (10) stecken.

7. Fahrzeugheizung nach einem der vorstehenden Ansprüche, **dadurch gekennzeichnet, dass** mehrere Wärmeübertrager (2a, 2b, 2c) vorgesehen ist, an den jeweils wenigstens eine Heizeinrichtung (10) befestigt ist.

8. Fahrzeugheizung nach Anspruch 7, **dadurch gekennzeichnet, dass** die Wärmeübertrager (2a, 2b, 2c) in Strömungsrichtung hintereinander angeordnet sind

9. Fahrzeugheizung nach Anspruch 7 oder 8, **dadurch gekennzeichnet, dass** benachbarte Wärmeübertrager (2a, 2b, 2c) in Bezug auf die Strömungsrichtung unterschiedlich angeordnet sind.

10. Fahrzeugheizung nach einem der vorstehenden Ansprüche, **dadurch gekennzeichnet, dass** die Kontaktplatten (11) und die an ihnen befestigten Positionierrahmen (13) jeweils gleich ausgebildet sind.

11. Fahrzeugheizung nach einem der vorstehenden Ansprüche, **dadurch gekennzeichnet, dass** beide Kontaktplatten (11) der wenigstens einen Heizeinrichtung (10) elektrisch von dem wenigstens einen Wärmeübertrager (2a, 2b, 2c) isoliert sind.

12. Fahrzeugheizung nach einem der vorstehenden Ansprüche, **dadurch gekennzeichnet, dass** beide Kontaktplatten (11) der wenigstens einen Heizeinrichtung (10) auf ihrer von dem mindestens einen Heizelement (12) abgewandten Seite eine elektrisch isolierende Auflage (15) tragen.

13. Fahrzeugheizung nach einem der vorstehenden Ansprüche, **dadurch gekennzeichnet, dass** das der oder die Wärmeübertrager (2a, 2b, 2c) Strangpressprofile sind, die Wärmeabgaberippen (7) aufweisen.

14. Fahrzeugheizung nach einem der vorstehenden Ansprüche, **dadurch gekennzeichnet, dass** der wenigstens eine Wärmeübertrager (2a, 2b, 2c) mehrere Heizeinrichtungsaufnahmen aufweist, wobei sich senkrecht zur Strömungsrichtung nebeneinander mehrere Kontaktschienen (3) erstrecken, wobei die Kontaktplatten (11) der Heizeinrichtungen (10) jeweils an eine von zwei benachbarten Kontaktschienen (3) angeschlossen sind.

15. Fahrzeugheizung nach Anspruch 14, **dadurch gekennzeichnet, dass** an mindestens einer der Kontaktschienen (3) Kontaktplatten (11) sowohl von Heizeinrichtungen (10), die sich in Heizeinrichtungsaufnahmen eines ersten der Wärmeübertrager (2a, 2b, 2c) befinden, als auch von Heizeinrichtungen (10), die sich in Heizeinrichtungsaufnahmen eines zweiten in Strömungsrichtung dahinter angeordneten Wärmeübertragen (2a, 2b, 2c) befinden, angeschlossen sind.

## Claims

1. A vehicle heating system, comprising
at least one heat transfer device (2a, 2b, 2c) through which an air flow to be heated can flow and at least one heating device (10) which is attached to the heat transfer device (2a, 2b, 2c) and which comprises two contact plates (11) between which a heating element (12) is arranged, said heating element (12) being held by a positioning frame (13) which is attached to one of the contact plates (11) by being snapped onto, pushed onto or injection-molded around it,
**characterized in that**
the contact plates (11) of the heating devices (10) each carry a positioning frame (13).

2. The vehicle heating system according to Claim 1, **characterized by** a holder (4) which is attached to the at least one heat transfer device (2a, 2b, 2c) in a clamping manner.

3. The vehicle heating system according to any one of the preceding claims, **characterized in that** the heat transfer device (2a, 2b, 2c) comprises at least one heating device receptacle (6) in which the heating device (10) or one of the heating devices (10) is arranged.

4. The vehicle heating system according to Claim 3, **characterized in that** the heating device receptacle (6) comprises an opening into which the heating device (10) is inserted.

5. The vehicle heating system according to any one of the preceding claims, **characterized in that** the positioning frames (13) comprise clamping noses (18) for clamping the heating elements (12).

6. The vehicle heating system according to any one of Claims 3 to 5, **characterized in that** the heating device receptacles (6) are formed as tubes in which the heating devices (10) are inserted.

7. The vehicle heating system according to any one of the preceding claims, **characterized in that** a plurality of heat transfer devices (2a, 2b, 2c) is provided, to each of which at least one heating device (10) is attached.

8. The vehicle heating system according to Claim 7, **characterized in that** the heat transfer devices (2a, 2b, 2c) are arranged in series as seen in flow direction.

9. The vehicle heating system according to Claim 7 or 8, **characterized in that** neighboring heat transfer devices (2a, 2b, 2c) are arranged differently with respect to the flow direction.

10. The vehicle heating system according to any one of the preceding claims, **characterized in that** the contact plates (11) and the positioning frames (13) attached thereto are each formed in an equal manner.

11. The vehicle heating system according to any one of the preceding claims, **characterized in that** the two contact plates (11) of the at least one heating device (10) are electrically isolated from the at least one heat transfer device (2a, 2b, 2c).

12. The vehicle heating system according to any one of the preceding claims, **characterized in that** the two contact plates (11) of the at least one heating device (10) carry an electrically insulating lining (15) on their side facing away from the at least one heating element (12).

13. The vehicle heating system according to any one of the preceding claims, **characterized in that** the heat transfer device(s) (2a, 2b, 2c) is/are extruded profiles which comprise heat transfer ribs (7).

14. The vehicle heating system according to any one of the preceding claims, **characterized in that** the at least one heat transfer device (2a, 2b, 2c) comprises a plurality of heating device receptacles, wherein a plurality of contact rails (3) extend aside each other perpendicular to the flow direction, wherein the contact plates (11) of the heating devices (10) are each connected to one of two neighboring contact rails (3).

15. The vehicle heating system according to Claim 14, **characterized in that** contact plates (11) of heating devices (10) which are positioned in heating device receptacles of a first one of the heat transfer devices (2a, 2b, 2c) as well as of heating devices (10) which are positioned in heating device receptacles of a second one of the heat transfer devices (2a, 2b, 2c) arranged downstream therefrom as seen in flow direction are connected to at least one of the contact rails (3).

## Revendications

1. Chauffage pour véhicule avec
au moins un échangeur de chaleur (2a, 2b, 2c) apte à être parcouru par un débit d'air à chauffer, et au moins un dispositif de chauffage (10) fixé à l'échangeur de chaleur (2a, 2b, 2c) et comportant deux plaques de contact (11), entre lesquelles est installé un élément de chauffage (12) maintenu par un cadre de positionnement (13) fixé à l'une des plaques de contact (11) par encliquetage, coulissement ou par enrobage par injection,
**caractérisé en ce que**
les plaques de contact (11) du dispositif de chauffage (10) portent chacune un cadre de positionnement (13).

2. Chauffage pour véhicule selon la revendication 1, **caractérisé par** un support (4) fixé par serrage sur l'au moins un échangeur de chaleur (2a, 2b, 2c).

3. Chauffage pour véhicule selon l'une des revendications précédentes, **caractérisé en ce que** l'échangeur de chaleur (2a, 2b, 2c) comporte au moins une admission de dispositif de chauffage (6), dans laquelle sont installés le ou les dispositifs de chauffage (10).

4. Chauffage pour véhicule selon la revendication 3, **caractérisé en ce que** l'admission de dispositif de chauffage (6) comporte une ouverture dans laquelle est inséré le dispositif de chauffage (10).

5. Chauffage pour véhicule selon l'une des revendications précédentes, **caractérisé en ce que** les cadres de positionnement (13) comportent des nez de serrage (18) pour serrer les éléments de chauffage (12).

6. Chauffage pour véhicule selon l'une des revendications 3 à 5, **caractérisé en ce que** les admissions de dispositif de chauffage (6) sont conçues comme des tuyaux, dans lesquels sont insérés les dispositifs de chauffage (10).

7. Chauffage pour véhicule selon l'une des revendications précédentes, **caractérisé en ce qu'**il est prévu plusieurs échangeurs de chaleur (2a, 2b, 2c), sur chacun desquels est fixé au moins un dispositif de chauffage (10).

8. Chauffage pour véhicule selon la revendication 7, **caractérisé en ce que** les échangeurs de chaleur (2a, 2b, 2c) sont installés les uns à la suite des autres dans le sens d'écoulement.

9. Chauffage pour véhicule selon la revendication 7 ou 8, **caractérisé en ce que** les échangeurs de chaleur (2a, 2b, 2c) voisins sont installés différemment par rapport au sens d'écoulement.

10. Chauffage pour véhicule selon l'une des revendications précédentes, **caractérisé en ce que** les plaques de contact (11) et les cadres de positionnement (13) fixés à celles-ci sont à chaque fois formés de la même manière.

11. Chauffage pour véhicule selon l'une des revendications précédentes, **caractérisé en ce que** les deux plaques de contact (11) de l'au moins un dispositif de chauffage (10) sont isolées électriquement par rapport à l'au moins un échangeur de chaleur (2a, 2b, 2c).

12. Chauffage pour véhicule selon l'une des revendications précédentes, **caractérisé en ce que** les deux plaques de contact (11) de l'au moins un dispositif de chauffage (10) portent une surface d'appui (15) électriquement isolante, de leur côté détourné de l'au moins un élément de chauffage (12).

13. Chauffage pour véhicule selon l'une des revendications précédentes, **caractérisé en ce que** le ou les échangeurs de chaleur (2a, 2b, 2c) sont des profilés filés comportant des nervures à émission de chaleur (7).

14. Chauffage pour véhicule selon l'une des revendications précédentes, **caractérisé en ce que** l'au moins un échangeur de chaleur (2a, 2b, 2c) comporte plusieurs admissions de dispositif de chauffage, où plusieurs rails de contact (3) s'étendent côte à côte, verticalement au sens d'écoulement, où les plaques de contact (11) des dispositifs de chauffage (10) sont chacune reliées à l'un parmi deux rails de contact (3) voisins.

15. Chauffage pour véhicule selon la revendication 14, **caractérisé en ce qu'**à au moins l'un des rails de contact (3) sont reliées les plaques de contact (11) aussi bien des dispositifs de chauffage (10) situés dans les admissions de dispositif de chauffage d'un premier échangeur de chaleur (2a, 2b, 2c), que des dispositifs de chauffage (10) situés dans les admissions de dispositif de chauffage d'un deuxième échangeur de chaleur (2a, 2b, 2c) installé en aval dans le sens d'écoulement.
